# EUROPÄISCHE PATENTSCHRIFT

(11) **EP 3 330 116 B1**
(45) Veröffentlichungstag und Bekanntmachung des Hinweises auf die Patenterteilung: **08.01.2020**
(21) Anmeldenummer: 17204405.9
(22) Anmeldetag: 29.11.2017
(51) Int. Cl.: B60K 15/01, B60H 1/22, B60K 15/03

(54) **FAHRZEUG**
VEHICLE
VÉHICULE AUTOMOBILE

(30) Priorität: 02.12.2016 DE 102016123323
(43) Veröffentlichungstag der Anmeldung: 06.06.2018
(73) Patentinhaber: Eberspächer Climate Control Systems GmbH & Co. KG, 73730 Esslingen (DE)
(72) Erfinder: Eberspach, Günter, 72649 Wolfschlugen (DE); Jensen, Hans, 73265 Dettingen unter Teck (DE)
(74) Vertreter: Ruttensperger Lachnit Trossin Gomoll

(56) Entgegenhaltungen:
- EP-A2- 0 807 756
- EP-A2- 1 045 131
- DE-C1- 10 125 588
- US-A- 5 251 603

## Beschreibung

Die vorliegende Erfindung betrifft ein Fahrzeug gemäß dem Oberbegriff des Anspruchs 1, welches einen in einem Motorraum angeordneten Antriebsmotor sowie ein ebenfalls im Motorraum angeordnetes brennstoffbetriebenes Fahrzeugheizgerät umfasst. Zur Versorgung des Fahrzeugheizgeräts mit Brennstoff ist am Fahrzeug ferner ein Brennstofftank vorgesehen, mit welchem das Fahrzeugheizgerät über eine Brennstoffleitung verbunden ist. Ist der Motor ein Brennkraftmotor, kann auch dieser aus dem Brennstofftank gespeist werden.

Bei derartigen Fahrzeugen kann insbesondere dann, wenn diese als sogenannte Plugln-Hybride ausgebildet sind, die Anforderung bestehen, das Fahrzeugheizgerät auch dann zu betreiben, wenn der Antriebsmotor und damit auch der Motorraum durch einen vorangehenden Betrieb des Antriebsmotors erwärmt ist. Da die zum Fahrzeugheizgerät führende Brennstoffleitung aufgrund der Positionierung des Fahrzeugheizgeräts im Motorraum sich wenigstens bereichsweise im Motorraum und somit auch vergleichsweise nahe am Antriebsmotor erstreckt, besteht in diesem Zustand die Gefahr, dass der im Allgemeinen nahezu drucklos durch die Brennstoffleitung strömende Brennstoff verdampft bzw. Blasen bildet. Erreichen derartige Blasen im Verbrennungsbetrieb die Brennkammer, kann dies zu einem Flammabriss oder zu einer Beeinträchtigung des Verbrennungsverhaltens und somit zu einem erhöhten Schadstoffausstoß führen.

Ein Fahrzeug gemäß dem Oberbegriff des Anspruchs 1 ist aus der DE 101 25 588 C1 bekannt.

Die EP 1 045 131 A2 offenbart eine Einrichtung zur Versorgung einer Brennkraftmaschine eines Kraftfahrzeugs mit Kraftstoff, bei welcher eine von einem Tank zu einer Brennkraftmaschine führende Kraftstoffleitung und eine von der Brennkraftmaschine zu dem Tank zurück führende Kraftstoffleitung in einem Lüftungskanal angeordnet sind. Ein im Bereich der Brennkraftmaschine vorgesehenes Gebläse oder eine Ansaugeinheit der Brennkraftmaschine saugt Luft in einen im Bereich des Tanks angeordneten Eintritt des Lüftungskanal und fördert die Luft durch den Lüftungskanal in Richtung von dem im Bereich des Tanks angeordneten Eintritt zu einem im Bereich der Brennkraftmaschine liegenden Austritt des Lüftungskanals.

Es ist die Aufgabe der vorliegenden Erfindung, ein Fahrzeug vorzusehen, bei welchem ein von den im Bereich des Fahrzeugs vorherrschenden thermischen Bedingungen weitestgehend unbeeinträchtigter Betrieb eines brennstoffbetriebenen Fahrzeugheizgeräts möglich ist.

Gemäß der vorliegenden Erfindung wird diese Aufgabe gelöst durch ein Fahrzeug gemäß Anspruch 1. Dieses umfasst:
- einen in einem Motorraum angeordneten Antriebsmotor;
- ein im Motorraum angeordnetes brennstoffbetriebenes Fahrzeugheizgerät,
- einen Brennstofftank,
- eine vom Brennstofftank zum Fahrzeugheizgerät führende Brennstoffleitung,
- eine die Brennstoffleitung wenigstens bereichsweise umhüllende Kühlluftleitungsanordnung zum Bereitstellen eines Kühlluftströmungskanals für die, die Brennstoffleitung umströmende Kühlluft.

Durch die erfindungsgemäß vorgesehene Kühlluftleitungsanordnung, welche die Brennstoffleitung wenigstens bereichsweise umhüllt, wird die Brennstoffleitung nicht nur nach außen und beispielsweise zu einer vergleichsweise warmen Umgebung hin abgeschirmt und somit vor Erwärmung geschützt, sondern es wird die Möglichkeit geschaffen, durch Bereitstellen eines die Brennstoffleitung umströmenden Kühlluftstroms Wärme aus dem Bereich der Brennstoffleitung abzuführen und somit eine übermäßige Erwärmung der Brennstoffleitung zu verhindern.

Dieser Effekt kann gemäß einem vorteilhaften Aspekt der vorliegenden Erfindung dann besonders effizient genutzt werden, wenn die Kühlluftleitungsanordnung die Brennstoffleitung wenigstens in einem Bereich ihres im Bereich des Motorraums sich erstreckenden Längenabschnitts umhüllt.

Um ohne der Bereitstellung von die Strömung der Kühlluft generierenden Aggregaten allein aufgrund der an einem Fahrzeug insbesondere im Fahrbetrieb vorherrschenden Druckverhältnisse eine Kühlluftströmung durch den Kühlluftströmungskanal hindurch zu induzieren, wird vorgeschlagen, dass ein Eintrittsöffnungsbereich der Kühlluftleitungsanordnung in einer Fahrzeuglängsrichtung vor einem Austrittsöffnungsbereich der Kühlluftleitungsanordnung positioniert ist, also näher an einem Fahrzeugfrontendbereich positioniert ist, als der Ausströmöffnungsbereich.

Bei dem erfindungsgemäßen Aufbau ist ferner vorgesehen, dass ein Eintrittsöffnungsbereich der Kühlluftleitungsanordnung in einem Bereich höheren Luftdrucks am Fahrzeug angeordnet ist, und dass ein Austrittsöffnungsbereich der Kühlluftleitungsanordnung in einem Bereich niedrigeren Luftdrucks am Fahrzeug angeordnet ist.

Im Fahrbetrieb eines Fahrzeugs entsteht im Fahrzeugfrontendbereich aufgrund des Staudrucks ein erhöhter Luftdruck. Es ist daher zum effizienten Ausnutzen der im Fahrbetrieb an einem Fahrzeug entstehenden Luftdruckverhältnisse zum Erzwingen einer Luftströmung im Kühlluftströmungskanal vorgesehen, dass der Eintrittsöffnungsbereich der Kühlluftleitungsanordnung nahe einem Fahrzeugfrontendbereich oder/und in Richtung zu dem Fahrzeugfrontendbereich offen angeordnet ist.

Gleichermaßen wird aufgrund der Umströmung eines fahrenden Fahrzeugs der Luftdruck im Bereich eines Unterbodens und im Bereich eines Fahrzeugheckbereichs geringer sein, als insbesondere im Bereich des Fahrzeugfrontendbereichs. Um auch diesen Effekt ausnutzen zu können, ist bei dem erfindungsgemäßen Fahrzeug weiter vorgesehen, dass der Austrittsöffnungsbereich der Kühlluftleitungsanordnung im Bereich eines Unterbodens oder/und in einem Fahrzeugheckbereich oder/und in Richtung zu dem Unterboden oder/und einem Fahrzeugheckendbereich offen angeordnet ist.

Zur Anpassung der Kühlluftleitungsanordnung an die Formgebung der im Allgemeinen mehrere Krümmungsbereiche aufweisenden Brennstoffleitung wird vorgeschlagen, dass die Kühlluftleitungsanordnung einen flexiblen Schlauch umfasst.

Der erfindungsgemäße Effekt einer vorzugsweise passiven Kühlung einer Brennstoffleitung kann besonders effizient genutzt werden, da der Motorraum in einem Frontbereich des Fahrzeugs angeordnet ist und der Brennstofftank in einem Heckbereich des Fahrzeugs angeordnet ist.

Die vorliegende Erfindung wird nachfolgend mit Bezug auf die beiliegenden Figuren detailliert beschrieben. Es zeigt:
- Fig. 1: in prinzipartiger Darstellung ein Fahrzeug;
- Fig. 2: in prinzipartiger Darstellung eine bereichsweise von einer Kühlluftleitungsanordnung umhüllte Brennstoffleitung;
- Fig. 3: eine der Fig. 2 entsprechende Darstellung einer alternativen Ausgestaltung;
- Fig. 4: eine Darstellung einer nicht erfindungsgemäßen Ausgestaltungsart.

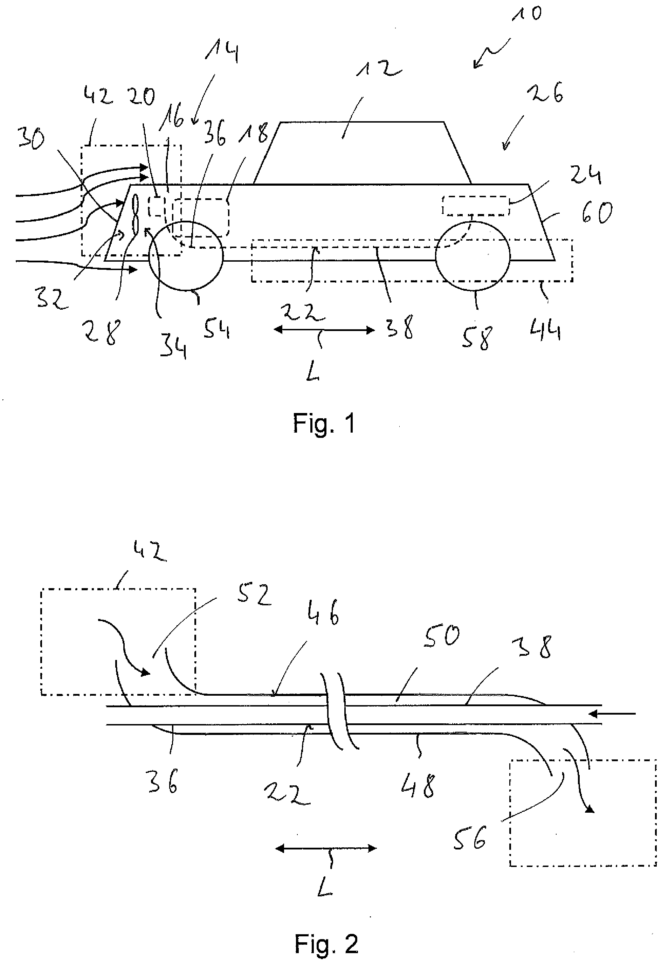

In Fig. 1 ist ein Fahrzeug allgemein mit 10 bezeichnet. Das in einer Fahrzeuglängsrichtung L langgestreckte und im Allgemeinen auch in dieser Fahrzeuglängsrichtung L vorwärts und rückwärts bewegbare Fahrzeug 10 weist in einem in der Fahrzeuglängsrichtung L, bezogen auf eine Vorwärtsfahrtrichtung, vor einer Fahrgastzelle 12 liegenden Fahrzeugfrontbereich 14 einen Motorraum 16 auf. In dem Motorraum 16 ist ein Antriebsmotor 18, beispielsweise ein Brennkraftmotor, angeordnet. Im Motorraum 16 ist ferner ein brennstoffbetriebenes Fahrzeugheizgerät 20 angeordnet. Dieses wird über eine Brennstoffleitung 22 mit aus einem Brennstofftank 24 abgezogenem Brennstoff gespeist. Der Brennstofftank 24 ist in der in Fig. 1 dargestellten Ausgestaltung des Fahrzeugs 10 in der Fahrzeuglängsrichtung L, bezogen auf die Vorwärtsfahrtrichtung, im Wesentlichen hinter der Fahrgastzelle 12, also in einem Fahrzeugheckbereich 26 angeordnet.

Im Motorraum 16 ist ferner ein schematisch dargestelltes Fahrzeuggebläse 28 vorgesehen, welches Luft zum Kühlen von Kühlflüssigkeit des Antriebsmotors 18 durch einen nicht dargestellten Kühler hindurch fördert. Das Fahrzeuggebläse 28 ist vorzugsweise im Wesentlichen direkt an einem Fahrzeugfrontendbereich 30 angeordnet, so dass es im Fahrbetrieb an seiner Saugseite 32 von der auf den Fahrzeugfrontendbereich 30 des Fahrzeugs 10 zu strömenden Luft angeströmt wird. An seiner Druckseite 34 gibt das Fahrzeuggebläse 28 die von diesem geförderte Luft in Richtung zu dem bereits angesprochenen Kühler mit erhöhtem Druck ab.

Die das Fahrzeugheizgerät 20 mit dem Brennstofftank 24 verbindende Brennstoffleitung 22 erstreckt sich mit einem Längenabschnitt 36 derselben im Motorraum 16 und somit im Allgemeinen vergleichsweise nahe am Antriebsmotor 18. In einem in Richtung zum Brennstofftank 24 folgenden Längenabschnitt 38 ist die Brennstoffleitung 22 unter der Fahrgastzelle 12 an einem Unterboden 40 bzw. entlang des Unterbodens 40 in Richtung auf den Brennstofftank 24 zu geführt.

Die Brennstoffleitung 22 erstreckt sich somit im Fahrzeug 10 insbesondere mit ihrem an das Fahrzeugheizgerät 20 anschließenden Längenabschnitt 36 zumindest bereichsweise in einem Bereich 42 höheren Luftdrucks, und erstreckt sich insbesondere mit ihren entlang des Unterbodens 40 bzw. im Fahrzeugheckbereich 26 sich erstreckenden Längenabschnitt 38 in einem Bereich 44 niedrigeren Luftdrucks. Diese Bereiche 42, 44 unterschiedlichen Luftdrucks entstehen im Fahrbetrieb des Fahrzeugs 10 aufgrund des am Fahrzeugfrontendbereich 30 entstehenden Staudrucks und aufgrund der Umströmung des Fahrzeugs 10 von seinem Fahrzeugfrontbereich 14 zu seinem Fahrzeugheckbereich 26. Bei dieser Umströmung entsteht aufgrund der näherungsweise tragflächenprofilartigen Kontur des Fahrzeugs 10 im Bereich der entlang des Unterbodens 40 geführten Luftströmung im Verhältnis zu der entlang der Oberseite bzw. der Fahrgastzelle 12 geführten Luftströmung und im Verhältnis zu dem am Fahrzeugfrontendbereich 30 entstehenden Staudruck ein Unterdruck bzw. ein niedrigerer Luftdruck.

Diese im Fahrbetrieb des Fahrzeugs 10 sich einstellenden Luftdruckverhältnisse nutzt die vorliegende Erfindung, um, wie im Folgenden detailliert dargelegt, die Brennstoffleitung 22 zumindest bereichsweise durch Umströmung mit Kühlluft zu kühlen und somit gegen übermäßige Erwärmung insbesondere in ihrem im Motorraum 16 sich erstreckenden Längenabschnitt 36 zu schützen.

Die Fig. 2 zeigt in prinzipieller Darstellung die Brennstoffleitung 22 mit ihren Längenabschnitten 36, 38. In Zuordnung zu der Brennstoffleitung 22 ist eine diese wenigstens bereichsweise und umhüllende Kühlluftleitungsanordnung 46 vorgesehen. Diese kann einen flexiblen Schlauch 48 umfassen, in welchem ein Kühlluftströmungskanal 50 zur Durchströmung mit die Brennstoffleitung 22 umströmender Kühlluft gebildet ist. Die Kühlluftleitungsanordnung 46 ist so angeordnet, dass sie mit einem Eintrittsöffnungsbereich 52 in dem Bereich 42 höheren Luftdrucks positioniert ist, so dass in diesem Bereich 42 höheren Luftdrucks Luft in den Kühlluftströmungskanal 50 eintreten kann. Dieser Eintrittsöffnungsbereich 52 ist vorzugsweise so positioniert, dass er im Fahrzeug 10 nahe an dem bzw. unmittelbar hinter dem Fahrzeugfrontendbereich 30 positioniert ist, insbesondere vor Vorderrädern 54 des Fahrzeugs 10 positioniert ist. Alternativ oder zusätzlich ist es möglich, den Eintrittsöffnungsbereich 52 an der Druckseite 34 des Fahrzeuggebläses 12 zu positionieren, so dass ein Teil der durch das Fahrzeuggebläse 28 geförderten Luft in den Kühlluftströmungskanal 50 eintritt, vorzugsweise bevor diese Luft den nicht dargestellten Kühler durchströmt hat. Beispielsweise kann die Kühlluftleitungsanordnung 46 mit ihrem Eintrittsöffnungsbereich 52 an ein Gebläsegehäuse des Fahrzeuggebläses 28 im Bereich der Druckseite 34 angeschlossen sein.

Ein Austrittsöffnungsbereich 56 der Kühlluftleitungsanordnung 46 ist am Fahrzeug so positioniert, dass in diesem Bereich der Kühlluftströmungskanal 50 zu dem Bereich 44 niedrigeren Luftdrucks offen ist. Dieser Austrittsöffnungsbereich 56 kann also im Bereich des Unterbodens 40 vorzugsweise zwischen den Vorderrädern 54 und Hinterrädern 58 des Fahrzeugs 10 positioniert sein und in Richtung zum Unterboden 40 oder in Richtung zu einem Fahrzeugheckendbereich 60 hin offen sein. Bei einer alternativen Ausgestaltung kann der Austrittsöffnungsbereich 56 beispielsweise über eine nicht dargestellte Leitungsverbindung in Verbindung mit der Saugseite 32 des Fahrzeuggebläses 28 stehen, beispielsweise an ein Gebläsegehäuse im Bereich der Saugseite 32 angeschlossen sein.

Durch das Positionieren des Eintrittsöffnungsbereichs 52 einerseits und des Austrittsöffnungsbereichs 56 andererseits in Bereichen unterschiedlich hohen Luftdrucks wird eine Luftströmung durch den Kühlluftströmungskanal 50 hindurch erzwungen. Da diese Luftströmung gebildet ist durch vergleichsweise kalte, beim Anströmen des Fahrzeugfrontendbereich 30 in den Bereich des Fahrzeugs 10 gelangende Luft, kann effizient Wärme aus dem Bereich der Brennstoffleitung 22 abgetragen werden, so dass insbesondere in demjenigen Längenabschnitt 36, in welchem die Brennstoffleitung 22 Wärme vom Motorraum 16 bzw. vom Motor 18 aufnehmen kann, eine übermäßige Erwärmung der Brennstoffleitung 22 und somit das Verdampfen vom Brennstoff im Inneren der Brennstoffleitung 22 vermieden werden können. Auch dann, wenn bei stehendem Fahrzeug 10 keine eine derartige Druckdifferenz generierende Umströmung bzw. Anströmung des Fahrzeugs 10 vorhanden ist, kann, beispielsweise unter Ausnutzung der Förderwirkung des Fahrzeuggebläses 28, eine derartige Strömung durch den Kühlluftströmungskanal 50 hindurch erzwungen werden. Ist dies aufgrund konstruktiver Rahmenbedingungen nicht möglich, so ist die Brennstoffleitung 22 insbesondere in ihren im Motorraum 16 sich erstreckenden Längenabschnitt 36 zumindest nach außen hin abgeschirmt und vor Erwärmung durch Wärmestrahlung oder/und Wärmekonvektion geschützt.

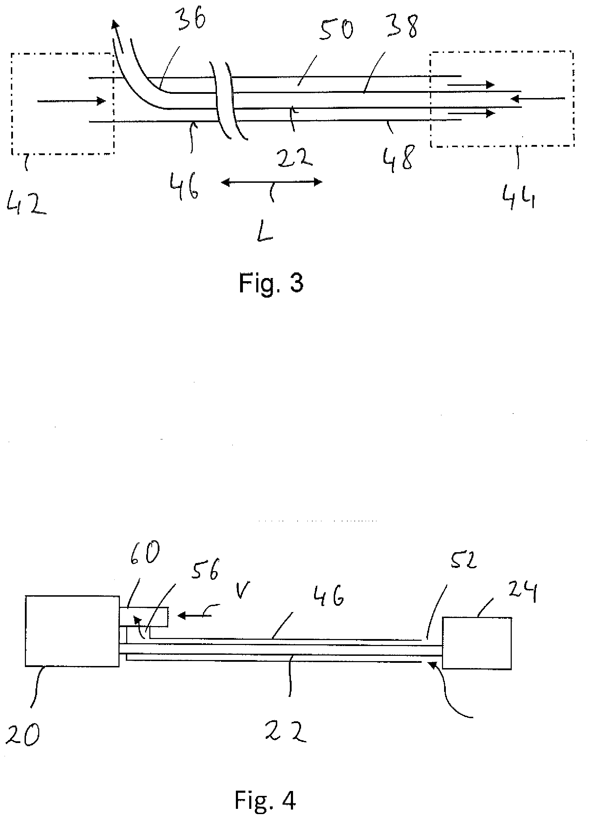

Die Fig. 3 zeigt eine alternative Ausgestaltung der Zusammenwirkung der Brennstoffleitung 22 mit der Kühlluftleitungsanordnung 46. In dem in Fig. 3 prinzipiell dargestellten Ausgestaltungsbeispiel ist deutlich erkennbar, dass die Kühlluftleitungsanordnung 46 in ihrem Eintrittsöffnungsbereich 52 im Wesentlichen in Richtung der Fahrzeuglängsrichtung L zum Bereich 42 höheren Luftdrucks offen ist, beispielsweise unmittelbar hinter dem Fahrzeugfrontendbereich 30 oder im Bereich der Druckseite 34 des Fahrzeuggebläses 28. Im Bereich ihres Austrittsöffnungsbereichs 56 ist die Kühlluftleitungsanordnung 46 ebenfalls im Wesentlichen in Richtung der Fahrzeuglängsrichtung L und in Richtung zum Fahrzeugheckendbereich 60 hin orientiert offen. Es ist selbstverständlich, dass die in den Fig. 2 und 3 dargestellten, verschiedenen Konfigurationen der Kühlluftleitungsanordnung 46 in ihrem Eintrittsöffnungsbereich 52 bzw. ihrem Austrittsöffnungsbereich 56 beliebig miteinander kombiniert werden können.

Um bei der vorangehend beschriebenen Kühlluftleitungsanordnung 46 einen definierten Abstand des flexiblen Schlauchs 48 zur Brennstoffleitung 22 bereitzustellen, ist es beispielsweise möglich, in verschiedenen Längenbereichen Distanzelemente bereitzustellen, welche einerseits eine definierte Positionierung des Schlauchs 48 bezüglich der Brennstoffleitung 22 vorgeben, andererseits die Strömung der Kühlluft durch den Kühlluftströmungskanal 50 hindurch im Wesentlichen nicht behindern, beispielsweise mehrere Strömungsöffnungen hierfür aufweisen.

Eine nicht erfindungsgemäße Ausgestaltung ist in Fig. 4 gezeigt. Die Kühlluftleitungsanordnung 46 ist mit ihrem Eintrittsöffnungsbereich 52 beispielsweise nahe dem Brennstofftank 24 positioniert. Der Austrittsöffnungsbereich 56 ist an einen allgemein mit 60 bezeichneten Verbrennungslufteintrittsbereich des Fahrzeugheizgeräts 20 angeschlossen. Über den Verbrennungslufteintrittsbereich 60, beispielsweise ausgebildet als Ansaugstutzen, wird zusammen mit dem aus dem Brennstofftank 24 abgezogenen Brennstoff zu verbrennende Verbrennungsluft V vermittels eines Verbrennungsluftgebläses, beispielsweise Seitenkanalgebläse, in das Fahrzeugheizgerät 20 gesaugt. Dies bedeutet grundsätzlich, dass am Verbrennungslufteintrittsbereich 60 ein Unterdruck vorherrscht, der bei dieser Ausgestaltungsform genutzt wird, um Luft durch die Kühlluftleitungsanordnung 46 zu saugen und diese durch die Kühlluftleitungsanordnung 46 hindurch gesaugte Luft in das Fahrzeugheizgerät 20 zu fördern und zur Verbrennung mit Brennstoff zu nutzen. Dabei kann die durch die Kühlluftleitungsanordnung 46 hindurch gesaugte Luft einen Teil der für die Verbrennung erforderlichen Luft bereitstellen, welcher zusammen mit von außen anzusaugender Verbrennungsluft V zur Vermischung und Verbrennung mit dem Brennstoff genutzt wird. Alternativ könnte auch die gesamte für die Verbrennung erforderliche Luft durch die Kühlluftleitungsanordnung 46 hindurch gesaugt und über den Verbrennungslufteintrittsbereich 60 in das Fahrzeugheizgerät 20 geleitet werden.

Die Prinzipien der vorliegenden Erfindung können dann besonders effizient genutzt werden, wenn der den Antriebsmotor und das Fahrzeugheizgerät enthaltende Motorraum im Frontbereich des Fahrzeugs angeordnet ist. Gleichwohl sei darauf hingewiesen, dass die Erfindung auch Anwendung finden kann bei einem Fahrzeug, bei welchem der Motorraum und damit der Antriebsmotor sowie das Fahrzeugheizgerät im Heckbereich, also hinter der Fahrgastzelle angeordnet sind.

## Patentansprüche

1. Fahrzeug, umfassend:
- einen in einem Motorraum (16) angeordneten Antriebsmotor (18);
- ein im Motorraum (16) angeordnetes brennstoffbetriebenes Fahrzeugheizgerät (20),
- einen Brennstofftank (24),
- eine vom Brennstofftank (24) zum Fahrzeugheizgerät (20) führende Brennstoffleitung (22),
wobei der Motorraum (16) in einem Frontbereich (14) des Fahrzeugs (10) angeordnet ist und der Brennstofftank (24) in einem Heckbereich (26) des Fahrzeugs (10) angeordnet ist,
**gekennzeichnet durch** eine die Brennstoffleitung (22) wenigstens bereichsweise umhüllende Kühlluftleitungsanordnung (46) zum Bereitstellen eines Kühlluftströmungskanals (50) für die, die Brennstoffleitung (22) umströmende Kühlluft, wobei ein Eintrittsöffnungsbereich (52) der Kühlluftleitungsanordnung (46) in einem Bereich (42) höheren Luftdrucks am Fahrzeug (10) angeordnet ist, wobei der Eintrittsöffnungsbereich (52) nahe einem Fahrzeugfrontendbereich (30) oder/und in Richtung zu dem Fahrzeugfrontendbereich (30) offen angeordnet ist, und wobei ein Austrittsöffnungsbereich (56) der Kühlluftleitungsanordnung (46) in einem Bereich (44) niedrigeren Luftdrucks am Fahrzeug (10) angeordnet ist, wobei der Austrittsöffnungsbereich (56) im Bereich eines Unterbodens (40) oder/und in einem Fahrzeugheckbereich (26) oder/und in Richtung zu dem Unterboden (40) oder/und einem Fahrzeugheckendbereich (60) offen angeordnet ist.

2. Fahrzeug nach Anspruch 1, **dadurch gekennzeichnet, dass** die Kühlluftleitungsanordnung (46) die Brennstoffleitung (22) wenigstens in einem Bereich ihres im Bereich des Motorraums (16) sich erstreckenden Längenabschnitt (36) umhüllt.

3. Fahrzeug nach Anspruch 1 oder 2, **dadurch gekennzeichnet, dass** ein Eintrittsöffnungsbereich (52) der Kühlluftleitungsanordnung (46) in einer Fahrzeuglängsrichtung (L) vor einem Austrittsöffnungsbereich (56) der Kühlluftleitungsanordnung (46) positioniert ist.

4. Fahrzeug nach einem der vorangehenden Ansprüche, **dadurch gekennzeichnet, dass** die Kühlluftleitungsanordnung (46) einen flexiblen Schlauch (48) umfasst.

## Claims

1. Vehicle, comprising:
- a drive motor (18) arranged in an engine compartment (16),
- a fuel-operated vehicle heating device (20) arranged in the engine compartment (16),
- a fuel tank (24),
- a fuel line (22) leading from the fuel tank (24) to the vehicle heating device (20, wherein the engine compartment (16) is arranged in a front area (14) of the vehicle (10) and the fuel tank (24) is arranged in a rear area (26) of the vehicle (10), **characterized by** a cooling air line arrangement (46) enveloping the fuel line (22) in at least some areas for providing a cooling air flow channel (50) for the cooling air flowing around the fuel line (22), wherein an inlet opening area (52) of the cooling air line arrangement (46) is arranged in an area (42) of higher air pressure at the vehicle (10), wherein the inlet opening area (52) is arranged close to a vehicle front end area (30) or/and open in the direction towards the vehicle front end area (30) and wherein an outlet opening area (56) of the cooling air line arrangement (46) is arranged in an area (44) of lower air pressure at the vehicle (10), wherein the outlet opening area (56) is arranged in the area of an underbody (40) or/and in a vehicle rear area (26) or/and open in the direction towards the underbody (40) or/and towards a vehicle rear end area (60).

2. Vehicle in accordance with claim 1, **characterized in that** the cooling air line arrangement (46) envelops the fuel line (22) at least in one area of its length section (36) extending in the area of the engine compartment (16).

3. Vehicle in accordance with claim 1 or 2, **characterized in that** an inlet opening area (52) of the cooling air line arrangement (46) is positioned in a vehicle longitudinal direction (L) in front of an outlet opening area (56) of the cooling air line arrangement (46).

4. Vehicle in accordance with one of the above claims, **characterized in that** the cooling air line arrangement (46) comprises a flexible tube (48).

## Revendications

1. Véhicule, comprenant :
- un moteur d'entraînement (18) disposé dans un compartiment moteur (16),
- un dispositif de chauffage de véhicule fonctionnant au combustible (20) disposé dans le compartiment moteur (16),
- un réservoir de combustible (24),
- une conduite de combustible (22) menant du réservoir de combustible (24) au dispositif de chauffage de véhicule (20),
dans lequel le compartiment moteur (16) est disposé dans une zone avant (14) du véhicule (10) et le réservoir de combustible (24) est disposé dans une zone arrière (26) du véhicule (10),
**caractérisé par** un ensemble de conduite d'air de refroidissement (46) enveloppant la conduite de combustible (22) au moins partiellement pour prévoir un canal d'écoulement d'air de refroidissement (50) pour l'air de refroidissement circulant autour de la conduite de combustible (22), dans lequel une zone d'ouverture d'entrée (52) de l'ensemble de conduite d'air de refroidissement (46) est disposée dans une zone (42) de pression d'air supérieure au véhicule (10), dans laquelle la zone d'ouverture d'entrée (52) est disposée à proximité d'une zone d'extrémité avant de véhicule (30) et/ou ouverte dans la direction vers la zone d'extrémité avant de véhicule (30) et dans laquelle une zone d'ouverture de sortie (56) de l'ensemble de conduite d'air de refroidissement (46) est disposée dans une zone de pression d'air inférieure (44) au véhicule (10), dans laquelle la zone d'ouverture de sortie (56) est disposée dans la zone d'un soubassement (40) et/ou dans une zone arrière de véhicule (26) et/ou ouverte en direction du soubassement (40) et/ou d'une zone d'extrémité arrière de véhicule (60).

2. Véhicule selon la revendication 1, **caractérisé en ce que** l'ensemble de conduite d'air de refroidissement (46) enveloppe la conduite de combustible (22) au moins sur une partie de sa section de longueur (36) s'étendant dans la zone du compartiment moteur (16).

3. Véhicule selon la revendication 1 ou 2, **caractérisé en ce qu'**une zone d'ouverture d'entrée (52) de l'ensemble de conduite d'air de refroidissement (46) est positionné dans une direction longitudinale de véhicule (L) devant une zone d'ouverture de sortie (56) de l'ensemble de conduite d'air de refroidissement (46).

4. Véhicule selon l'une des revendications précédentes, **caractérisé en ce que** l'ensemble de conduite d'air de refroidissement (46) comprend un tube flexible (48).
